# EUROPÄISCHE PATENTSCHRIFT

(11) **EP 2 153 485 B1**
(45) Veröffentlichungstag und Bekanntmachung des Hinweises auf die Patenterteilung: **09.01.2019**
(21) Anmeldenummer: 07725582.6
(22) Anmeldetag: 25.05.2007
(51) Int. Cl.: H01M 8/02, H01M 8/04, H01M 8/10, H01M 8/0289, C01B 3/38, H01M 8/04014, H01M 8/04007, H01M 8/04119, H01M 8/04291, H01M 8/103, H01M 8/1048, H01M 8/04223, H01M 8/0637, H01M 8/04089, H01M 8/1018

(54) **MIT FLÜSSIGGAS BETRIEBENES BRENNSTOFFZELLENSYSTEM**
FUEL CELL SYSTEM OPERATED WITH LIQUID GAS
SYSTÈME DE PILE À COMBUSTIBLE FONCTIONNANT AVEC DU GAZ LIQUIDE

(43) Veröffentlichungstag der Anmeldung: 17.02.2010
(73) Patentinhaber: Truma Gerätetechnik GmbH & Co. KG, 85640 Putzbrunn (DE)
(72) Erfinder: SCHIEGL, Andreas, 82041 Oberhaching (DE); FRANK, Reinhard, 80799 München (DE)
(74) Vertreter: Müller Hoffmann & Partner
(86) Internationale Anmeldenummer: PCT/EP2007/004686
(87) Internationale Veröffentlichungsnummer: WO 2008/145148

(56) Entgegenhaltungen:
- EP-A- 1 439 082
- WO-A-01/48846
- WO-A-2007/031082
- DE-A1- 10 328 960
- US-A1- 2002 160 239
- US-A1- 2002 182 458
- US-A1- 2005 136 304
- MEHTA V ET AL: "Review and analysis of PEM fuel cell design and manufacturing" JOURNAL OF POWER SOURCES, ELSEVIER, AMSTERDAM, NL, Bd. 114, Nr. 1, 25. Februar 2003 (2003-02-25), Seiten 32-53, XP004412816 ISSN: 0378-7753

## Beschreibung

Erfindung betrifft ein mit Flüssiggas betreibbares Brennstoffzellensystem.

Brennstoffzellen benötigen zur Erzeugung von elektrischer und thermischer Energie als Reaktanden Wasserstoff und (Luft)Sauerstoff. Es sind verschiedene Reformierungsverfahren bekannt, wie zum Beispiel Dampfreformierung, autotherme Reformierung, partielle Oxidation oder Cracken, bei denen wasserstoffhaltiges Gas durch die Umwandlung von gasförmigen und flüssigen Kohlenwasserstoffen erzeugt wird. Diese Verfahren sind zumeist sehr komplex und erfordern einen hohen apparativen und regelungstechnischen Aufwand. In der Regel weisen sie eine Vielzahl von Einzelkomponenten wie zum Beispiel Reformierreaktoren, Shiftstufen, Gasfeinreinigungsstufen, Wärmetauscher und Verdampfer auf.

Weiterhin sind Hochtemperatur-Festoxid-Brennstoffzellen (SOFC) und Schmelz-Karbonat-Brennstoffzellen (MCFC) bekannt, in denen gasförmige und flüssige Kohlenwasserstoffe direkt bzw. unter Vorschaltung einer so genannten Pre-Reforming-Stufe bei Temperaturen von 600 °C - 1000 °C und unter Zusatz von (Luft)Sauerstoff verstromt werden. Nachteile dieser Systeme sind geringe thermische Zyklierbarkeit, lange Aufheiz- und Abkühlzeiten sowie sehr hohe Anforderungen an die eingesetzten Materialien.

Brennstoffzellensysteme werden seit einiger Zeit auch als APU-Systeme (Auxiliary Power Unit) für die Bordstromversorgung in Freizeitfahrzeugen eingesetzt. Ebenso ist es bekannt, derartige Brennstoffzellensysteme auch als Stromgeneratoren bzw. Kraft-Wärme-Kopplungssysteme für die dezentrale Energieversorgung einzusetzen.

In der US 2002/0182458 A1 wird ein Brennstoffzellensystem beschrieben, bei dem neben anderen Brennstoffen auch Propan als Brennstoff zugeführt werden kann. Der Brennstoff wird in einem als autothermer Reaktor ausgebildeten Reformer verarbeitet und in ein wasserstoffhaltiges Reformatgas gewandelt. Das Reformatgas wird dann über einen Wärmetauscher in einen Anoden-Reaktionsraum der Brennstoffzelle geführt.

Aus DE 103 28 960 A1, EP 1 439 082 A1 und US 2002/0160239 A1 sind weitere Brennstoffzellensysteme bekannt.

Auch in WO 2007/031082 A1, WO 01/48846 A1 sowie US 2005/0136304 A1 sind Brennstoffzellensysteme beschrieben.

In US 3,488,226 wird ein Verfahren zur Erzeugung von Wasserstoff sowie dessen Verwendung in Schmelzcarbonat-Brennstoffzellen beschrieben. Der Reformierungsschritt zum Erzeugen des Wasserstoffs kann auf einem Katalysator erfolgen, der in der Anodenkammer der Brennstoffzelle angeordnet ist.

Aus US 5,302,470 ist ein weiteres Brennstoffzellensystem bekannt. In EP 1 881 056 A1 bzw. JP 2006-318721 wird der Einsatz von Flüssiggas für eine Brennstoffzelle beschrieben.

Der Erfindung liegt die Aufgabe zugrunde, ein Brennstoffzellensystem anzugeben, das die direkte Verstromung eines Brennstoffs ermöglicht, ohne dass ein hoher apparativer Aufwand für die Reformierung des Brennstoffs betrieben werden muss.

Die Aufgabe wird erfindungsgemäß durch ein Brennstoffzellensystem nach Anspruch 1 gelöst. Weiterhin umfasst die vorliegende Erfindung eine Verwendung des Brennstoffzellensystems gemäß Anspruch 6, ein Verfahren zum Betreiben des Brennstoffzellensystems gemäß Anspruch 8, ein Verfahren zum Starten eines Brennstoffzellensystems gemäß Anspruch 10 und ein Verfahren zum Starten eines Brennstoffzellensystems gemäß Anspruch 11 sowie ein Verfahren zum Stoppen des Brennstoffzellensystems gemäß Anspruch 13.

Ein erfindungsgemäßes Brennstoffzellensystem weist eine Brennstoffzelle mit einer Hochtemperatur-Polymer-Elektrolyt-Membran (HT-PEM), einen Flüssiggasvorrat sowie eine Flüssiggaszuleitung zum Einleiten des Flüssiggases aus dem Flüssiggasvorrat in einen Anoden-Reaktionsraum der Brennstoffzelle auf.

Es wird somit eine Brennstoffzelle angegeben, die eine direkte Verstromung von gasförmigem Flüssiggas ohne großen apparativen Aufwand und bei moderaten Betriebstemperaturen ermöglicht. Durch die Verwendung von Polymer-Elektrolyt-Membran-Brennstoffzellen kann eine hohe Start-Stopp-Zyklusfähigkeit erreicht werden. Ebenso sind vorteilhaft kurze Start- und Stoppzeiten sowie geringere Materialanforderungen aufgrund verringerter Betriebstemperaturen.

Die Brennstoffzelle kann aus einer Einzelbrennstoffzelle oder einer Mehrzahl von Einzelbrennstoffzellen, die in Form eines Stapels angeordnet sind, bestehen. Der grundsätzliche Aufbau einer Brennstoffzelle ist bekannt und muss daher an dieser Stelle nicht näher erläutert werden. Die Brennstoffzelle kann unter Druck bzw. unter annähernd atmosphärischen Bedingungen betrieben werden. Letzteres verringert den Energiebedarf der Peripheriesysteme (Luft- und Gaspumpen) erheblich. Der Aufbau erfolgt mit Materialien, die den Temperaturanforderungen genügen, zum Beispiel mit Bipolarplatten aus Metall oder Kohlenstoff-Kunststoff-Composit-Materialien.

Das Flüssiggas wird ohne aufwendigen Reformierungsprozess unmittelbar in den Anoden-Reaktionsraum zugeführt, wo es verstromt werden kann. Es kann lediglich notwendig sein, eine Entschwefelungseinrichtung zwischen dem Flüssiggasvorrat und der Brennstoffzelle vorzusehen, um das zugeführte Flüssiggas zu entschwefeln. Dort kann auch eine Abtrennung von Odorierungsmitteln erfolgen.

Als Flüssiggas eignen sich Propan, Butan oder ein Gemisch aus Propan und Butan.

Dem Flüssiggasstrom kann vor dem Eintreten in den Anoden-Reaktionsraum Wasserdampf beigemischt werden. Die Beimischung von Wasserdampf kann vorteilhaft sein, sie ist aber je nach Ausgestaltung des Brennstoffzellensystems nicht zwingend erforderlich. Ein in dem Anoden-Reaktionsraum, zum Beispiel auf oder in einer Gasdiffusionselektrode vorgesehener Katalysator ist geeignet, das Flüssiggas umzuwandeln und unter anderem Wasserstoffionen zu erzeugen.

Der Wasserstoffanteil wird in der bekannten elektrochemischen Brennstoffzellen-Reaktion unter Zuführung von (Luft)Sauerstoff in den Kathoden-Reaktionsraum in elektrische und thermische Energie sowie das Reaktionsprodukt Wasser umgewandelt. Es hat sich herausgestellt, dass die Strom- bzw. Spannungsausbeute von der Betriebstemperatur abhängt. Je höher der Temperaturwert ist, desto mehr Strom kann bei konstanter Betriebsspannung durch die Brennstoffzelle abgegeben werden.

Die Hochtemperatur-Polymer-Elektrolyt-Membran wird in einem Temperaturbereich von Raumtemperatur bis über 300 °C, vorzugsweise in einem Bereich von 150 °C bis 250 °C betrieben. Sie trennt den Anoden-Reaktionsraum von einem Kathoden-Reaktionsraum der Brennstoffzelle, dem Umgebungsluft oder Sauerstoff zuführbar ist.

Als Materialien für die HT-PEM finden vorrangig Phosphorsäure-dotierte PBI-(Polybenzimidazol)-Polymer-Membranen Verwendung. Geeignet sind jedoch auch andere Kunststoffe, die in diesem Temperaturbereich eine hohe thermische Stabilität aufweisen und protonenleitend sind bzw. durch entsprechende Zugaben/Dotierungen protonenleitfähig gemacht werden können.

Die HT-PEM weist zumindest auf der dem Anoden-Reaktionsraum zugewandten Seite eine Katalysatorschicht auf, die einen Katalysator trägt, der mit oder ohne Zusatz von Wasserdampf eine Aufspaltung des Flüssiggases in Wasserstoff bzw. Wasserstoffionen und weitere Bestandteile ermöglicht. Als Katalysatoren können alle Arten von Edel- und Nichtedelmetallen dienen, die in dem genannten Temperaturbereich diese Aufspaltung des Flüssiggases unter Zusatz von Wasserdampf in Wasserstoff bzw. Wasserstoffionen, Kohlendioxid, Kohlenmonoxid bzw. kurzkettigere Kohlenwasserstoffe ermöglichen. Geeignet sind zum Beispiel Platin-haltige Katalysatoren. Als weitere Materialien sind u. a. Pd, Ru, Fe, Ni, Au, Ag, Rh, Ir, Co, W, Mo, Ce, Cu, Zn, Al, Zr bzw. Legierungen davon mit oder ohne Pt denkbar.

Das in den Anoden-Reaktionsraum zuströmende Flüssiggas kann vorher mit Wasserdampf vermischt werden. Zu diesem Zweck kann eine Verdampfereinrichtung zum Verdampfen von Wasser, eine Wasserdampf-Zuleitung zum Abführen des Wasserdampfs von der Verdampfereinrichtung und eine stromauf von dem Anoden-Reaktionsraum gelegene Mischstelle vorgesehen sein, an der die Wasserdampf-Zuleitung und die Flüssiggas-Zuleitung gekoppelt sind und an der der von der Verdampfereinrichtung zuströmende Wasserdampf mit dem Flüssiggas mischbar ist.

In der Verdampfereinrichtung wird somit der Wasserdampf erzeugt, der dem Flüssiggas vor dem Eintreten in den Anoden-Reaktionsraum beigemischt wird.

Es kann eine Zusatzheizeinrichtung zum Beheizen der Brennstoffzelle vorgesehen sein, wobei die Zusatzheizeinrichtung eine von der Brennstoffzelle separate Einrichtung sein kann oder in die Brennstoffzelle direkt integriert ist. Die Zusatzheizeinrichtung dient dazu, die Brennstoffzelle zum Starten des Systems auf eine geeignete Temperatur zu bringen. Ebenso kann die Zusatzheizeinrichtung auch während des Betriebes genutzt werden, um die Brennstoffzelle auf der erforderlichen Betriebstemperatur zu halten.

Als Brennstoff für die Zusatzheizeinrichtung wie aber auch für die Verdampfereinrichtung kann direkt Flüssiggas aus dem Flüssiggasvorrat zugeführt werden.

Ergänzend oder alternativ kann aber auch eine Anoden-Offgas-Rückführung vorgesehen sein, zum Führen von aus dem Anoden-Reaktionsraum der Brennstoffzelle austretendem Anoden-Offgas. Das Anoden-Offgas enthält ein Gemisch aus Kohlendioxid, Kohlenmonoxid, Wasserdampf und nicht verwertetem Wasserstoff bzw. umgesetztem Flüssiggas. Das bedeutet, dass das Anoden-Offgas noch thermisch verwertbare bzw. brennbare Stoffe enthält, die zum Beispiel in der Zusatzheizeinrichtung oder der Verdampfereinrichtung genutzt werden können.

Zu diesem Zweck kann die Anoden-Offgas-Rückführung zu einem an der Verdampfereinrichtung vorgesehenen Brenner und/oder zu der Zusatzheizeinrichtung geführt werden, wo die noch vorhandenen brennbaren Stoffe (Wasserstoff, Flüssiggas, Kohlenmonoxid, kurzkettige Kohlenwasserstoffe) verbrannt werden können.

Ebenso kann das Anoden-Offgas über die Anoden-Offgas-Rückführung auch wieder an eine Anoden-Eingangsseite der Brennstoffzelle geführt werden, wo es - unter Umständen nach erneuter Beimischung von Wasserdampf - erneut in den Anoden-Reaktionsraum eingeleitet wird. Das noch nicht verwertete Flüssiggas und der Wasserdampf können somit mehrfach durch die Brennstoffzelle geführt werden, um wenigstens das Flüssiggas schließlich vollständig umzusetzen.

Wie oben bereits ausgeführt, können ergänzend oder alternativ der Brenner der Verdampfereinrichtung und/oder die Zusatzheizeinrichtung direkt auch mit Flüssiggas aus dem Flüssiggasvorrat versorgt werden.

Das erfindungsgemäße Brennstoffzellensystem kann in einem Fahrzeug, zum Beispiel einem Freizeitfahrzeug wie einem Reisemobil oder Caravan, verwendet werden, wobei die Zusatzheizeinrichtung der Brennstoffzelle gleichzeitig auch Bestandteil einer Heizvorrichtung zum Beheizen eines Innenraums des Fahrzeugs ist.

Die Heizvorrichtung kann dementsprechend - wie die Zusatzheizeinrichtung - mit Flüssiggas betrieben werden.

Somit besteht die Möglichkeit, eine an sich insbesondere bei Freizeitfahrzeugen bekannte Flüssiggas-Heizung gleichzeitig auch als Zusatzheizeinrichtung für die Brennstoffzelle zu nutzen. Eine eigenständige, zusätzliche Heizeinrichtung für die Brennstoffzelle ist dann nicht erforderlich.

Bevorzugter Anwendungsbereich des Systems in einer elektrischen Leistungsgröße von wenigen Watt bis einigen Kilowatt ist ein Einsatz als APU-System für die Bordstromversorgung in Freizeitfahrzeugen sowie der Einsatz als autarker Stromgenerator bzw. Kraft-Wärme-Kopplungssystem für die dezentrale Energieversorgung.

Ein Verfahren zum Betreiben eines Brennstoffzellensystems ist dadurch gekennzeichnet, dass die Brennstoffzelle eine Hochtemperatur-Polymer-Elektrolyt-Membran-Brennstoffzelle ist und dass ein Anoden-Reaktionsraum der Brennstoffzelle mit Flüssiggas, insbesondere mit einer Mischung aus Flüssiggas und Wasserdampf gespeist wird. Das Flüssiggas wird - von einer gegebenenfalls vorher durchzuführenden Entschwefelung abgesehen - direkt aus dem Flüssiggasvorrat in die Brennstoffzelle eingeleitet. Eine separate Reformierung des Brennstoffs in einer eigenen Reformiereinheit ist somit nicht erforderlich.

Ein Verfahren zum Starten eines HT-PEM-Brennstoffzellensystems ist gekennzeichnet durch die Schritte:
- Zuführen von Flüssiggas zu der Brennstoffzelle;
- Hindurchführen des Flüssiggases durch einen Anoden-Reaktionsraum der Brennstoffzelle;
- Führen des aus dem Anoden-Reaktionsraum austretenden Flüssiggases bzw. Anoden-Offgases zu einer an oder in der Brennstoffzelle vorgesehenen Zusatzheizeinrichtung und/oder zu einer Verdampfereinrichtung;
- mit Hilfe des Flüssiggases und/oder Anoden-Offgases Beheizen der Brennstoffzelle durch die Zusatzheizeinrichtung und/oder Beheizen der Verdampfereinrichtung zum Erzeugen von Wasserdampf;
- Zuführen des Wasserdampfs zu dem der Brennstoffzelle zugeführten Flüssiggas und Mischen des Wasserdampfs mit dem Flüssiggas;
- Zuführen des Gemischs aus Wasserdampf und Flüssiggas zu dem Anoden-Reaktionsraum;
- Zuführen von Luft zu einem Kathoden-Reaktionsraum der Brennstoffzelle;
- Anlegen einer elektrischen Last zum Betreiben der Brennstoffzelle.

Bei diesem Verfahren wird das Flüssiggas durch die HT-PEM-Brennstoffzelle geleitet und in der Zusatzheizeinrichtung sowie in der Verdampfereinrichtung unter Luftzufuhr verbrannt. Durch die Abwärme der Zusatzheizeinrichtung wird die Brennstoffzelle auf Betriebstemperatur gebracht. Zeitgleich erfolgt das Aufheizen der Verdampfereinrichtung. Sobald von der Verdampfereinrichtung Wasser verdampft wird, wird der entstehende Wasserdampf dem der Brennstoffzelle zugeführten Flüssiggas zugemischt und in den Anoden-Reaktionsraum der Brennstoffzelle eingeleitet. Zugleich wird der durch die Zusatzheizeinrichtung erwärmten Brennstoffzelle auf der Kathodenseite Luft zugeführt, um bei einer Lastanforderung an die Brennstoffzelle die elektrochemische Reaktion mit dem Flüssiggas-Wasserdampf-Gemisch in Gang zu setzen.

Bei diesem Verfahren müssen die Medienströme nicht umgeschaltet werden. Vielmehr kann insbesondere der Flüssiggasstrom permanent durch die Brennstoffzelle geführt werden. Das an der Brennstoffzelle austretende Flüssiggas bzw. Anoden-Offgas wird von der Verdampfereinrichtung und der Zusatzheizeinrichtung verbrannt, so dass kein Flüssiggas das Brennstoffzellensystem verlassen kann.

Bei einem anderen Verfahren zum Starten des HT-PEM-Brennstoffzellensystems wird das Flüssiggas aus dem Flüssiggasvorrat direkt zu der Zusatzheizeinrichtung und/oder zu der Verdampfereinrichtung geführt, um einerseits die Brennstoffzelle aufzuheizen und andererseits durch die Verdampfereinrichtung Wasserdampf zu erzeugen. Wenn die Brennstoffzelle eine vorgegebene Temperatur erreicht hat, wird das Flüssiggas aus dem Flüssiggasvorrat auch direkt in den Anoden-Reaktionsraum der Brennstoffzelle eingeleitet. Dabei kann Wasserdampf aus der Verdampfereinrichtung beigemischt werden. Bei einer Lastanforderung an die Brennstoffzelle wird die elektrochemische Reaktion in Gang gesetzt.

Im Betrieb der Brennstoffzelle kann je nach Auslegung des Systems entweder weiterhin direkt Flüssiggas zu der Zusatzheizeinrichtung und der Verdampfereinrichtung geführt werden, um die erforderliche Heizenergie bereitzustellen. Ebenso ist es möglich, die Direktzufuhr zu unterbrechen und stattdessen das an der Brennstoffzelle austretende Anoden-Offgas zu der Zusatzheizeinrichtung und der Verdampfereinrichtung zu führen. Das Anoden-Offgas enthält in der Regel noch in ausreichender Menge brennbare Materialien (Flüssiggas, Wasserstoff, Kohlenmonoxid, kurzkettige Kohlenwasserstoffe) und kann daher als Brennstoff genutzt werden.

Ein Verfahren zum Stoppen eines erfindungsgemäßen Brennstoffzellensystems weist die Schritte auf:
- Unterbrechen der Zuführung von Flüssiggas;
- weiterhin Zuführen von aus einem Anoden-Reaktionsraum der Brennstoffzelle austretendem Anoden-Offgas zu einer Verdampfereinrichtung zum Erzeugen von Wasserdampf;
- Zuführen des Wasserdampfs in den Anoden-Reaktionsraum.

Nach dem Unterbrechen der Zufuhr von Flüssiggas wird das noch im System befindliche Gasgemisch (Restwasserstoff, Kohlendioxid, Kohlenmonoxid bzw. kurzkettigere Kohlenwasserstoffe sowie Wasserdampf) in der Verdampfereinrichtung thermisch verwertet, wodurch weiterhin Wasserdampf erzeugt wird. Der nach wie vor der Brennstoffzelle zugeführte Wasserdampf verdrängt das restliche Gasgemisch aus dem System. Sobald die elektrochemische Reaktion in der Brennstoffzelle und nachfolgend der Brennvorgang in den Brennern der Verdampfereinrichtung und der Zusatzheizeinrichtung zum Erliegen kommt, können die gasführenden Leitungen und die Brennstoffzelle mit Luft oder in einem Inertgas gespült und das System abgekühlt werden.

Diese und weitere Vorteile und Merkmale der Erfindung werden nachfolgend anhand eines Beispiels unter Zuhilfenahme der begleitenden Figuren näher erläutert. Es zeigen:
**Figur 1** ein erfindungsgemäßes Brennstoffzellensystem in schematischer Darstellung; und
**Figur 2** den schematischen Aufbau einer in dem Brennstoffzellensystem eingesetzten Hochtemperatur-Polymer-Elektrolyt-Membran-Brennstoffzelle.

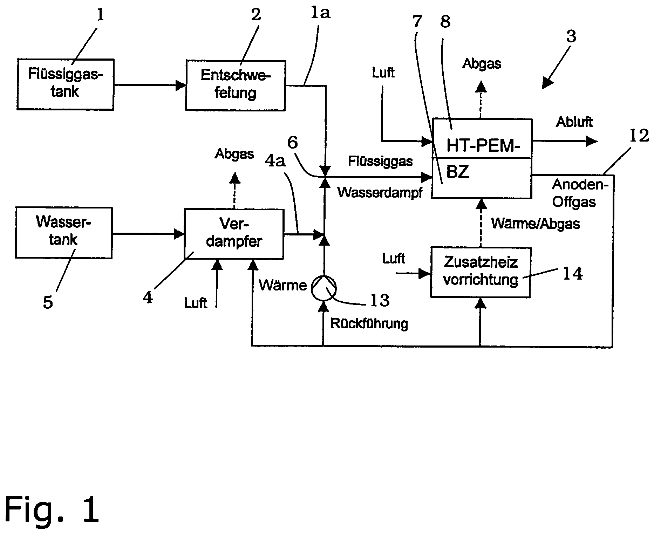

Figur 1 zeigt schematisch den Aufbau des Brennstoffzellensystems.

Ein als Flüssigkeitsvorrat dienender Flüssigkeitstank 1, zum Beispiel eine Gasflasche oder ein Speicher, enthält Flüssiggas wie zum Beispiel Propan, Butan oder ein Gemisch davon.

Das Flüssiggas wird dem Flüssiggastank 1 entnommen und durch eine Entschwefelungseinrichtung 2 geleitet. In dieser erfolgt die Abtrennung von Odorierungsmitteln und sonstigen im Flüssiggas enthaltenen Schwefelverbindungen.

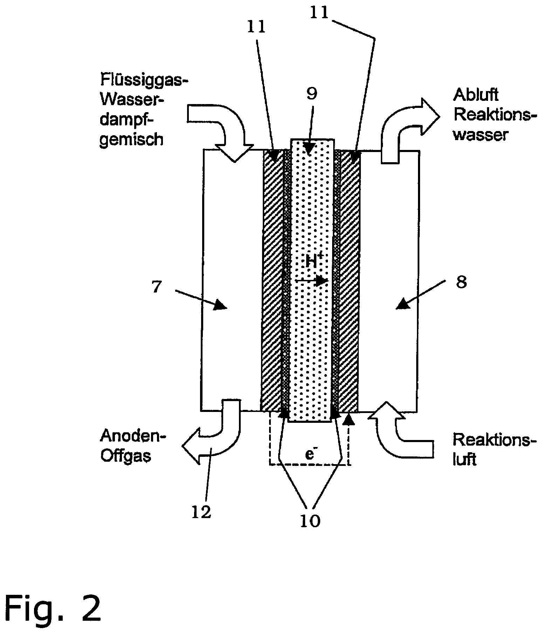

Danach wird das entschwefelte Flüssiggas über eine Flüssiggas-Zuleitung 1a in eine Brennstoffzelle 3 eingeleitet. Bei der Brennstoffzelle 3 handelt es sich um eine so genannte Hochtemperatur-Polymer-Elektrolyt-Membran-Brennstoffzelle (HT-PEM-BZ), die in einem Temperaturbereich von Raumtemperatur bis über 300 °C, bevorzugt im Bereich 150 °C bis 250 °C, arbeitet. Der Aufbau der Brennstoffzelle 3 ist an sich bekannt; er wird dennoch später noch anhand der Figur 2 näher erläutert.

Es ist weiterhin eine Verdampfereinrichtung 4 vorgesehen, die Wasser, das von einem Wassertank 5 zugeführt wird, verdampft. Der von der Verdampfereinrichtung 4 erzeugte Wasserdampf wird nachfolgend über eine Wasserdampf-Zuleitung 4a ebenfalls der Brennstoffzelle 3 zugeleitet und vor dem Eintritt in die Brennstoffzelle 3 an einer Mischstelle 6 mit dem Flüssiggas vermischt. Auf diese Weise tritt im Betrieb ein Flüssiggas-Wasserdampf-Gemisch in die Brennstoffzelle 3 ein.

Figur 2 zeigt schematisch den Aufbau der Brennstoffzelle 3.

Zwischen einem Anoden-Reaktionsraum 7 und einem Kathoden-Reaktionsraum 8 ist eine Hochtemperatur-Polymer-Elektrolyt-Membran 9 angeordnet. Als Material für die Membran 9 finden vorrangig Phosphorsäure-dotierte PBI-(Polybenzimidazol)-Polymer-Membranen Verwendung. Geeignet sind jedoch auch andere Kunststoffe, die in diesem Temperaturbereich eine hohe thermische Stabilität aufweisen, protonenleitend sind oder durch entsprechende Zugaben/Dotierungen protonenleitfähig gemacht werden können.

Auf der Membran 9 ist beidseitig eine Katalysatorschicht 10 aufgebracht. Als Katalysatoren können verschieden Arten von Edel- und Nichtedelmetallen dienen, wie oben bereits beschrieben wurde.

Über den Katalysatorschichten 10 sind jeweils in bekannter Weise Gasdiffusionselektroden 11 angeordnet.

Die Katalysatorschichten 10 bzw. die Katalysatoren an sich können auch in die Gasdiffusionselektroden 11 integriert sein. Dabei ist auch ein unterschiedlicher Aufbau auf der Anodenseite einerseits und auf der Kathodenseite andererseits möglich. Zum Beispiel können auch auf beiden Seiten unterschiedliche Materialien verwendet werden. Der in Figur 2 gezeigte Aufbau dient somit lediglich der Erläuterung eines Beispiels und ist nicht einschränkend zu verstehen.

Dem Anoden-Reaktionsraum 7 wird das Flüssiggas-Wasserdampf-Gemisch zugeführt. Demgegenüber wird Reaktionsluft in den Kathoden-Reaktionsraum 8 eingeleitet.

Der den Anoden-Reaktionsraum 7 verlassende Medienstrom wird als Anoden-Offgas-Strom 12 bezeichnet und kann ein Gemisch aus Kohlendioxid, Kohlenmonoxid, Wasserdampf, nicht verwertetem Wasserstoff und nicht umgesetztem Flüssiggas aufweisen. Auf der Kathodenseite tritt ein Gemisch aus Abluft und Reaktionswasser in Form von Wasserdampf aus dem Kathoden-Reaktionsraum 8 aus.

Die Brennstoffzelle 3 kann aus einer Einzelzelle oder einem System aus mehreren Einzelzellen, insbesondere einem Brennstoffzellenstapel, bestehen. Selbstverständlich ist das Flüssiggas-Wasserstoff-Gemisch gegebenenfalls sämtlichen Einzelzellen eines Brennstoffzellenstapels zuzuführen.

Wie Figur 1 zeigt, kann der Anoden-Offgas-Strom 12 aus der Brennstoffzelle 3 auf mehrere Arten weiter genutzt werden.

Zum einen kann der Anoden-Offgas-Strom 12 über eine Rückführungseinheit 13, zum Beispiel eine Pumpe, wieder in den Anodeneinlass der Brennstoffzelle 3 zurückgeleitet werden. Dabei kann frischer Wasserdampf bzw. weiteres Flüssiggas beigemischt werden. Auf diese Weise kann das Flüssiggas mehrfach durch die Brennstoffzelle 3 geleitet werden, um auch noch nicht verwertetes Flüssiggas nach und nach aufzubrauchen.

Ebenso ist es möglich, den Anoden-Offgas-Strom für die Wärmebereitstellung in der Verdampfereinrichtung 4 als Brennstoff zu nutzen. Die brennbaren Bestandteile des Anoden-Offgases reichen im Regelfall aus, genug Wärmeenergie für die Erzeugung des Wasserdampfs bereitzustellen.

Weiterhin ist es möglich, auch eine Zusatzheizeinrichtung 14 mit dem Anoden-Offgas-Strom 12 als Brennstoff zu versorgen. Mit Hilfe der Zusatzheizeinrichtung 14 wird die Brennstoffzelle 3 auf Betriebstemperatur gehalten bzw. zum Starten auf eine bestimmte Temperatur vorgeheizt. Die Zusatzheizeinrichtung 14 kann sowohl als separates Bauteil als auch als integrierter Bestandteil der Brennstoffzelle 3 ausgeführt sein. Die Verbrennungsreaktion kann katalytisch oder auf konventioneller Basis erfolgen.

Die Mischstelle 6 kann räumlich vor der Brennstoffzelle 3 angeordnet sein. Ebenso ist es möglich, die Mischstelle 6 in der Brennstoffzelle 3, jedoch noch stromauf von dem Anoden-Reaktionsraum 7 vorzusehen. Es kommt dabei lediglich darauf an, dass ein Flüssiggas-Wasserdampf-Gemisch in den Anoden-Reaktionsraum 7 eingeleitet werden kann. Gegebenenfalls kann diesem Gemisch auch noch - wie oben beschrieben - Anoden-Offgas beigemischt werden.

Vervollständigt wird das System durch eine nicht dargestellte Kondensatorvorrichtung, in der das in den Abluft- und Abgasströmen enthaltene Wasser rückgewonnen und dem Wasservorratsbehälter bzw. Wassertank 5 zugeführt wird. Ebenfalls nicht dargestellt sind Lüfter und/oder Pumpen für die Luft-, Gas- und Wasserversorgung sowie gegebenenfalls ein Kühllüfter für die Brennstoffzelle 3 und diverse elektrische Subsysteme wie zum Beispiel Spannungswandler für die Einspeisung des von der Brennstoffzelle 3 erzeugten Stroms in eine Batterie. Ebenfalls ist eine übergeordnete Systemsteuerung mit entsprechender Mess-, Steuer- und Regelungstechnik in den Figuren nicht gezeigt.

## Patentansprüche

1. Brennstoffzellensystem, mit
- einer Brennstoffzelle (3) mit einer Hochtemperatur-Polymer-Elektrolyt-Membran (9);
- einem Flüssiggasvorrat (1);
- einer Flüssiggas-Zuleitung (1a) zum Einleiten des Flüssiggases aus dem Flüssiggasvorrat (1) unmittelbar in den Anoden-Reaktionsraum (7) der Hochtemperatur-Polymer-Elektrolyt-Brennstoffzelle (3)
wobei die Hochtemperatur-Polymer-Elektrolyt-Membran (9) wenigstens auf der dem Anoden-Reaktionsraum (7) zugewandten Seite eine Katalysatorschicht (10) aufweist, die einen Katalysator zum Aufspalten des Flüssiggases in Wasserstoff bzw. Wasserstoffionen und weitere Bestandteile aufweist.

2. Brennstoffzellensystem nach Anspruch 1, **dadurch gekennzeichnet, dass** der Katalysator unter Zusatz von Wasserdampf zum Aufspalten des Flüssiggases in Wasserstoff bzw. Wasserstoffionen und weitere Bestandteile dient.

3. Brennstoffzellensystem nach einem der Ansprüche 1 oder 2, **gekennzeichnet durch**
- eine Verdampfereinrichtung (4) zum Verdampfen von Wasser;
- eine Wasserdampf-Zuleitung (4a) zum Abführen des Wasserdampfs von der Verdampfereinrichtung (4); und durch
- eine stromauf von dem Anoden-Reaktionsraum (7) gelegene Mischstelle (6), an der die Wasserdampf-Zuleitung (4a) und die Flüssiggas-Zuleitung (1a) gekoppelt sind und an der der von der Verdampfereinrichtung (4) zuströmende Wasserdampf mit dem Flüssiggas vermischt wird.

4. Brennstoffzellensystem nach einem der Ansprüche 1 bis 3, **dadurch gekennzeichnet, dass** eine Zusatzheizeinrichtung (14) zum Beheizen der Brennstoffzelle (3) vorgesehen ist, wobei die Zusatzheizeinrichtung (14) eine von der Brennstoffzelle (3) separate Einrichtung oder in die Hochtemperatur-Polymer-Elektrolyt-Brennstoffzelle (3) integriert ist.

5. Brennstoffzellensystem nach einem der Ansprüche 1 bis 4, **dadurch gekennzeichnet, dass** eine Anoden-Offgas-Rückführung (12) vorgesehen ist, zum Führen von aus dem Anoden-Reaktionsraum (7) der der Hochtemperatur-Polymer-Elektrolyt-Brennstoffzelle (3) austretendem Anoden-Offgas zu
- einer Anoden-Eingangsseite der Hochtemperatur-Polymer-Elektrolyt-Brennstoffzelle (3) zum Rückführen in den Anoden-Reaktionsraum (7);
- einem an der Verdampfereinrichtung (4) vorgesehenen Brenner; und/oder zu
- der Zusatzheizeinrichtung (14).

6. Verwendung eines Brennstoffzellensystems nach einem der Ansprüche 4 bis 5 in einem Fahrzeug, **dadurch gekennzeichnet, dass** eine Heizvorrichtung zum Beheizen eines Innenraums des Fahrzeugs vorgesehen ist und dass die Heizvorrichtung die Zusatzheizeinrichtung (14) aufweist.

7. Verwendung eines Brennstoffzellensystems nach einem der Ansprüche 1 bis 5, **dadurch gekennzeichnet, dass** das Brennstoffzellensystem als Bordstromversorgungssystem in einem Freizeitfahrzeug oder als System für eine dezentrale Energieversorgung dient.

8. Verfahren zum Betreiben eines Brennstoffzellensystems nach einem der Ansprüche 1 bis 5, **dadurch gekennzeichnet, dass**
- die Brennstoffzelle (3) eine Hochtemperatur-Polymer-Elektrolyt-Membran-Brennstoffzelle ist;
- der Anoden-Reaktionsraum (7) der Brennstoffzelle (3) mit Flüssiggas gespeist wird; und dass
- das Flüssiggas durch einen Katalysator in Wasserstoff bzw. Wasserstoffionen und weitere Bestandteile aufgespalten wird, wobei der Katalysator in einer Katalysatorschicht vorhanden ist, die wenigstens auf der dem Anoden-Reaktionsraum (7) zugewandten Seite der Hochtemperatur-Polymer-Elektrolyt-Membran (9) ausgebildet ist.

9. Verfahren nach Anspruch 8, **dadurch gekennzeichnet, dass** der Anoden-Reaktionsraum (7) mit einer Mischung aus Flüssiggas und Wasserdampf gespeist wird.

10. Verfahren zum Starten eines Brennstoffzellensystems (3), das mit einer Brennstoffzelle mit Hochtemperatur-Polymer-Elektrolyt-Membran (9) ausgestattet ist, mit den Schritten:
- Zuführen von Flüssiggas zu der Hochtemperatur-Polymer- Elektrolyt-Membran-Brennstoffzelle (3); ;
- Hindurchführen des Flüssiggases durch einen Anoden-Reaktionsraum (9) der Hochtemperatur-Polymer-Elektrolyt-Brennstoffzelle (3);
- Führen des aus dem Anoden-Reaktionsraum (7) austretenden Flüssiggases oder Führen von aus dem Anoden-Reaktionsraum (7) austretendem Anoden-Offgas zu einer an oder in der Hochtemperatur-Polymer-Elektrolyt-Brennstoffzelle (3) vorgesehenen Zusatzheizeinrichtung (14) und/oder zu einer Verdampfereinrichtung (4);
- durch Verbrennen des Flüssiggases und/oder des Anoden-Offgases Beheizen der Hochtemperatur-Polymer-Elektrolyt-Brennstoffzelle (3) durch die Zusatzheizeinrichtung (14) und/oder Beheizen der Verdampfereinrichtung (4) zum Erzeugen von Wasserdampf;
- Zuführen des Wasserdampfs zu dem der Hochtemperatur-Polymer-Elektrolyt-Brennstoffzelle (3) zugeführten Flüssiggas und Mischen des Wasserdampfs mit dem Flüssiggas;
- Zuführen des Gemischs aus Wasserdampf und Flüssiggas zu dem Anoden-Reaktionsraum (7);
- Zuführen von Luft zu einem Kathoden-Reaktionsraum (8) der Hochtemperatur-Polymer-Elektrolyt-Brennstoffzelle (3);
- Anlegen einer elektrischen Last zum Betreiben der Brennstoffzelle (3).

11. Verfahren zum Starten eines Brennstoffzellensystems (3), das mit einer Brennstoffzelle mit Hochtemperatur-Polymer-Elektrolyt-Membran (9) ausgestattet ist, mit den Schritten:
- Zuführen von Flüssiggas aus einem Flüssiggasvorrat (1) zu einer an oder in der Hochtemperatur-Polymer-Elektrolyt-Brennstoffzelle (3) vorgesehenen Zusatzheizeinrichtung (14) und zu einer Verdampfereinrichtung (4);
- durch Verbrennen des Flüssiggases Beheizen der Brennstoffzelle (3) durch die Zusatzheizeinrichtung (14) und/oder Beheizen der Verdampfereinrichtung (4) zum Erzeugen von Wasserdampf;
- nach Erreichen einer vorgegebenen Temperatur in der Brennstoffzelle (3) Zuführen von Flüssiggas aus dem Flüssiggasvorrat (1) zu einem Anoden-Reaktionsraum (7) der Hochtemperatur-Polymer-Elektrolyt-Brennstoffzelle (3);
- Zuführen des Wasserdampfs zu dem der Hochtemperatur-Polymer-Elektrolyt-Brennstoffzelle (3) zugeführten Flüssiggas und Mischen des Wasserdampfs mit dem Flüssiggas;
- Zuführen des Gemischs aus Wasserdampf und Flüssiggas zu dem Anoden-Reaktionsraum (7);
- Zuführen von Luft zu einem Kathoden-Reaktionsraum (8) der Hochtemperatur-Polymer-Elektrolyt-Brennstoffzelle (3);
- Anlegen einer elektrischen Last zum Betreiben der Hochtemperatur-Polymer-Elektrolyt-Brennstoffzelle (3).

12. Verfahren nach Anspruch 11, **dadurch gekennzeichnet, dass** nach dem Starten der der Hochtemperatur-Polymer-Elektrolyt-Brennstoffzelle (3) die direkte Zufuhr von Flüssiggas von dem Flüssiggasvorrat (1) zu der Zusatzheizeinrichtung (14) und/oder der Verdampfereinrichtung (4) unterbrochen wird und dass stattdessen aus dem Anoden-Reaktionsraum (7) austretendes Anoden-Offgas (12) zu der Zusatzheizeinrichtung (14) und/oder zu der Verdampfereinrichtung (4) zugeführt wird.

13. Verfahren zum Stoppen eines Brennstoffzellensystems nach einem der Ansprüche 1 bis 5, mit den Schritten
- Unterbrechen der Zuführung von Flüssiggas in den Anoden-Reaktionsraum (7);
- weiterhin Zuführen von aus dem Anoden-Reaktionsraum (7) der Brennstoffzelle (3) austretendem Anoden-Offgas (12) zu einer Verdampfereinrichtung (4) zum Erzeugen von Wasserdampf;
- Zuführen des Wasserdampfs in den Anoden-Reaktionsraum (7).

14. Verfahren nach Anspruch 13, **dadurch gekennzeichnet, dass** dann, wenn die elektrochemische Reaktion in der Brennstoffzelle (3) zum Erliegen gekommen ist, gasführende Leitungen und der Anoden-Reaktionsraum (7) mit Luft und/oder einem Inertgas gespült werden.

## Claims

1. A fuel cell system, comprising
- a fuel cell (3) with a high-temperature polymer electrolyte membrane (9);
- a supply of liquefied petroleum gas (1);
- a liquefied petroleum gas supply line (1a) for feeding the liquefied petroleum gas from the supply of liquefied petroleum gas (1) directly into the anode reaction chamber (7) of the high-temperature polymer electrolyte fuel cell (3), wherein
the high-temperature polymer electrolyte membrane (9) comprises a catalyst layer (10) at least on the side facing the anode reaction chamber (7), said catalyst layer (10) comprising a catalyst which allows decomposition of the liquefied petroleum gas into hydrogen or hydrogen ions and further components.

2. The fuel cell system according to Claim 1, **characterized in that,** with addition of water vapor, the catalyst allows decomposition of the liquefied petroleum gas into hydrogen or hydrogen ions and further components.

3. The fuel cell system according to anyone of Claims 1 or 2, **characterized by**
- a vaporizing device (4) for vaporizing water;
- a water vapor supply line (4a) for discharging the water vapor from the vaporizing device (4); and by
- a mixing site (6) positioned upstream of the anode reaction chamber (7), wherein the water vapor supply line (4a) and the liquefied petroleum gas supply line (1a) are coupled at said mixing site (6) and the water vapor streaming in from the vaporizing device (4) can be mixed with the liquefied petroleum gas at said mixing site (6).

4. The fuel cell system according to anyone of Claims 1 to 3, **characterized in that** an additional heating device (14) is provided for heating the high-temperature polymer electrolyte fuel cell (3), wherein the additional heating device (14) is a device separate from the fuel cell (3) or directly integrated into the fuel cell (3).

5. The fuel cell system according to anyone of Claims 1 to 4, **characterized in that** an anode off-gas return (12) is provided for carrying anode off-gas exiting from the anode reaction chamber (7) of the high-temperature polymer electrolyte fuel cell (3) to
- an anode input side of the high-temperature polymer electrolyte fuel cell (3) for return into the anode reaction chamber (7);
- a burner provided at the vaporizing device (4) and/or to
- the additional heating device (14).

6. Use of a fuel cell system according to anyone of Claims 4 to 5 in a vehicle, **characterized in that** a heating device for heating an interior of the vehicle is provided and that the heating device comprises the additional heating device (14).

7. Use of a fuel cell system according to anyone of Claims 1 to 5, **characterized in that** the fuel cell system serves as an onboard power supply system in a recreational vehicle or as a system for decentralized energy supply.

8. A method for operating a fuel cell system according to anyone of Claims 1 to 5, **characterized in that**
- the fuel cell (3) is a high-temperature polymer electrolyte membrane fuel cell;
- the anode reaction chamber (7) of the fuel cell (3) is fed with liquefied petroleum gas; and that
- the liquefied petroleum gas is decomposed by a catalyst into hydrogen or hydrogen ions and further components, wherein the catalyst is part of a catalyst layer formed at least on the side of the high-temperature polymer electrolyte membrane (9) facing the anode reaction chamber (7).

9. The method according to Claim 8, **characterized in that** the anode reaction chamber (7) is fed with a mixture of liquefied petroleum gas and water vapor.

10. A method for starting a fuel cell system (3) which is equipped with a fuel cell (3) having a high-temperature polymer electrolyte membrane (9), comprising the steps of:
- supplying liquefied petroleum gas to the high-temperature polymer electrolyte fuel cell (3);
- supplying the liquefied petroleum gas through an anode reaction chamber (9) of the high-temperature polymer electrolyte fuel cell (3);
- supplying the liquefied petroleum gas or anode off-gas exiting from the anode reaction chamber (7) to an additional heating device (14) provided at or in the high-temperature polymer electrolyte fuel cell (3) and/or to a vaporizing device (4);
- by combusting the liquefied petroleum gas and/or anode off-gas, heating the high-temperature polymer electrolyte fuel cell (3) through the additional heating device (14) and/or heating the vaporizing device (4) for generating water vapor;
- supplying the water vapor to the liquefied petroleum gas supplied to the high-temperature polymer electrolyte fuel cell (3) and mixing the water vapor with the liquefied petroleum gas;
- supplying the mixture of water vapor and liquefied petroleum gas to the anode reaction chamber (7);
- supplying air to a cathode reaction chamber (8) of the high-temperature polymer electrolyte fuel cell (3);
- applying an electric load for operating the fuel cell (3).

11. A method for starting a fuel cell system (3) which is equipped with a fuel cell (3) having a high-temperature polymer electrolyte membrane (9), comprising the steps of:
- supplying liquefied petroleum gas from a supply of liquefied petroleum gas (1) to an additional heating device (14) provided at or in the high-temperature polymer electrolyte fuel cell (3) and to a vaporizing device (4);
- by combusting the liquefied petroleum gas, heating the fuel cell (3) through the additional heating device (14) and/or heating the vaporizing device (4) for generating water vapor;
- after a specified temperature has been reached in the fuel cell (3), supplying liquefied petroleum gas from the supply of liquefied petroleum gas (1) to an anode reaction chamber (7) of the high-temperature polymer electrolyte fuel cell (3);
- supplying the water vapor to the liquefied petroleum gas supplied to the high-temperature polymer electrolyte fuel cell (3) and mixing the water vapor with the liquefied petroleum gas;
- supplying the mixture of water vapor and liquefied petroleum gas to the anode reaction chamber (7);
- supplying air to a cathode reaction chamber (8) of the high-temperature polymer electrolyte fuel cell (3);
- applying an electric load for operating the high-temperature polymer electrolyte fuel cell (3).

12. The method according to Claim 11, **characterized in that,** after the high-temperature polymer electrolyte fuel cell (3) has been started, the direct supply of liquefied petroleum gas from the supply of liquefied petroleum gas (1) to the additional heating device (14) and/or the vaporizing device (4) is interrupted and that, instead, anode off-gas (12) exiting from the anode reaction chamber (7) is supplied to the additional heating device (14) and/or to the vaporizing device (4).

13. A method for stopping a fuel cell system according to anyone of Claims 1 to 5, comprising the steps of:
- interrupting the supply of liquefied petroleum gas in the anode reaction chamber (7);
- continuing to supply anode off-gas (12) exiting from the anode reaction chamber (7) of the fuel cell (3) to a vaporizing device (4) for generating water vapor;
- supplying the water vapor into the anode reaction chamber (7).

14. The method according to Claim 13, **characterized in that,** whenever the electrochemical reaction in the fuel cell (3) has come to a standstill, the gas-carrying lines and the anode reaction chamber (7) are rinsed with air and/or an inert gas.

## Revendications

1. Système de pile à combustible avec
- une pile à combustible (3) avec une membrane électrolytique en polymère haute température (9) ;
- un réservoir de gaz liquide (1) ;
- une conduite d'amenée de gaz liquide (la) pour introduire le gaz liquide, à sa sortie du réservoir de gaz liquide (1), directement dans l'espace de réaction anodique (7) de la pile à combustible à électrolyte en polymère haute température (3), la membrane électrolytique en polymère haute température (9) présentant au moins sur son côté tourné vers l'espace de réaction anodique (7) une couche catalytique (10) qui comporte un catalyseur pour fractionner le gaz liquide en hydrogène ou ions hydrogène et d'autres composants.

2. Système de pile à combustible selon la revendication 1, **caractérisé en ce que** le catalyseur sert à fractionner le gaz liquide en hydrogène ou ions hydrogène et d'autres composants avec l'ajout de vapeur d'eau.

3. Système de pile à combustible selon l'une des revendications 1 ou 2, **caractérisé par**
- un dispositif d'évaporation (4) pour l'évaporation de l'eau ;
- une conduite d'amenée de vapeur d'eau (4a) pour évacuer la vapeur d'eau du dispositif d'évaporation (4) ; et par
- un point de mélange (6) qui est situé en amont de l'espace de réaction anodique (7), où la conduite d'amenée de vapeur d'eau (4a) et la conduite de gaz liquide (1a) sont accouplées et où la vapeur d'eau qui arrive du dispositif d'évaporation (4) est mélangée avec le gaz liquide.

4. Système de pile à combustible selon l'une des revendications 1 à 3, **caractérisé en ce qu'**il est prévu un dispositif de chauffage supplémentaire (14) pour chauffer la pile à combustible (3), le dispositif de chauffage supplémentaire (14) étant un dispositif séparé de la pile à combustible (3) ou étant intégré dans la pile à combustible à électrolyte en polymère haute température (3)

5. Système de pile à combustible selon l'une des revendications 1 à 4, **caractérisé en ce qu'**il est prévu une conduite de retour de dégagements gazeux anodiques (12) pour amener les dégagements gazeux anodiques, à leur sortie de l'espace de réaction anodique (7) de la pile à combustible à électrolyte en polymère haute température (3),
- jusqu'à un côté d'entrée anodique de la pile à combustible à électrolyte en polymère haute température (3), afin de les ramener dans l'espace de réaction anodique (7) ;
- jusqu'à un brûleur prévu au niveau du dispositif d'évaporation (4) ; et/ou
- jusqu'au dispositif de chauffage supplémentaire (14).

6. Utilisation d'un système de pile à combustible selon l'une des revendications 4 à 5 dans un véhicule, **caractérisée en ce qu'**il est prévu un dispositif de chauffage pour chauffer un habitacle du véhicule, et **en ce que** le dispositif de chauffage comporte le dispositif de chauffage supplémentaire (14).

7. Utilisation d'un système de pile à combustible selon l'une des revendications 1 à 5, **caractérisée en ce que** le système de pile à combustible sert de système d'alimentation électrique de bord, dans un véhicule de loisirs, ou de système pour une alimentation en énergie décentralisée.

8. Procédé pour le fonctionnement d'un système de pile à combustible selon l'une des revendications 1 à 5, **caractérisé en ce que**
- la pile à combustible (3) est une pile à combustible à membrane électrolytique en polymère haute température ;
- l'espace de réaction anodique (7) de la pile à combustible (3) est alimenté en gaz liquide ; et **en ce que**
- le gaz liquide est fractionné par un catalyseur en hydrogène ou ions hydrogène et d'autres composants, le catalyseur étant prévu dans une couche catalytique qui est formée au moins sur le côté de la membrane électrolytique en polymère haute température (9) tourné vers l'espace de réaction anodique (7).

9. Procédé selon la revendication 8, **caractérisé en ce que** l'espace de réaction anodique (7) est alimenté avec un mélange de gaz liquide et de vapeur d'eau.

10. Procédé pour démarrer un système de pile à combustible (3) qui est équipé d'une pile à combustible avec une membrane électrolytique en polymère haute température (9), avec les étapes qui consistent :
- à amener un gaz liquide jusqu'à la pile à combustible à membrane électrolytique en polymère haute température (3) ;
- à faire passer le gaz liquide à travers un espace de réaction anodique (9) de la pile à combustible à électrolyte en polymère haute température (3) ;
- à guider le gaz liquide qui sort de l'espace de réaction anodique (7) ou les dégagements gazeux anodiques qui sortent de l'espace de réaction anodique (7) jusqu'à un dispositif de chauffage supplémentaire (14) prévu sur ou dans la pile à combustible à électrolyte en polymère haute température (3) et/ou jusqu'à un dispositif d'évaporation (4) ;
- grâce à la combustion du gaz liquide et/ou des dégagements gazeux anodiques, à chauffer la pile à combustible à électrolyte en polymère haute température (3) à l'aide du dispositif de chauffage supplémentaire (14), et/ou à chauffer le dispositif d'évaporation (4) pour produire de la vapeur d'eau ;
- à amener la vapeur d'eau jusqu'au gaz liquide amené dans la pile à combustible à électrolyte en polymère haute température (3), et à mélanger la vapeur d'eau avec le gaz liquide ;
- à amener le mélange de vapeur d'eau et de gaz liquide jusqu'à l'espace de réaction anodique (7) ;
- à amener de l'air jusqu'à un espace de réaction cathodique (8) de la pile à combustible à électrolyte en polymère haute température (3) ;
- à appliquer une charge électrique pour faire fonctionner ladite pile à combustible (3).

11. Procédé pour démarrer un système de pile à combustible (3) qui est équipé d'une pile à combustible avec une membrane électrolytique en polymère haute température (9), avec les étapes qui consistent :
- à amener un gaz liquide qui sort d'un réservoir de gaz liquide (1) jusqu'à un dispositif de chauffage supplémentaire (14) prévu sur ou dans la pile à combustible à électrolyte en polymère haute température (3) et jusqu'à un dispositif d'évaporation (4) ;
- grâce à la combustion du gaz liquide, à chauffer la pile à combustible (3) à l'aide du dispositif de chauffage supplémentaire (14) et/ou à chauffer le dispositif d'évaporation (4) pour produire de la vapeur d'eau ;
- après qu'une température prédéfinie a été atteinte dans la pile à combustible (3), à amener du gaz liquide qui sort du réservoir de gaz liquide (1) jusqu'à un espace de réaction anodique (7) de la pile à combustible à électrolyte en polymère haute température (3),
- à amener la vapeur d'eau jusqu'au gaz liquide amené dans la pile à combustible à électrolyte en polymère haute température (3), et à mélanger la vapeur d'eau avec le gaz liquide ;
- à amener le mélange de vapeur d'eau et de gaz liquide jusqu'à l'espace de réaction anodique (7) ;
- à amener de l'air jusqu'à l'espace de réaction cathodique (8) de la pile à combustible à électrolyte en polymère haute température (3) ;
- à appliquer une charge électrique pour faire fonctionner ladite pile à combustible à électrolyte en polymère haute température (3).

12. Procédé selon la revendication 11, **caractérisé en ce qu'**après le démarrage de la pile à combustible à électrolyte en polymère haute température (3), l'amenée directe de gaz liquide du réservoir de gaz liquide (1) jusqu'au dispositif de chauffage supplémentaire (14) et/ou jusqu'au dispositif d'évaporation (4) est interrompue, et **en ce qu'**au lieu de cela, les dégagements gazeux anodiques (12) qui sortent de l'espace de réaction anodique (7) sont amenés jusqu'au dispositif de chauffage supplémentaire (14) et/ou jusqu'au dispositif d'évaporation (4).

13. Procédé pour arrêter un système de pile à combustible selon l'une des revendications 1 à 5, avec les étapes qui consistent
- à interrompre l'amenée de gaz liquide dans l'espace de réaction anodique (7) ;
- à continuer d'amener des dégagement gazeux anodiques (12) qui sortent de l'espace de réaction anodique (7) de la pile à combustible (3) jusqu'à un dispositif d'évaporation (4) pour produire de la vapeur d'eau ;
- à amener la vapeur d'eau dans l'espace de réaction anodique (7).

14. Procédé selon la revendication 13, caractérisé en ce lorsque la réaction électrochimique dans la pile à combustible (3) s'est arrêtée, les conduites d'amenée de gaz et l'espace de réaction anodique (7) sont rincés avec de l'air et/ou un gaz inerte.
